# EUROPÄISCHE PATENTSCHRIFT

(11) **EP 2 411 426 B1**
(45) Veröffentlichungstag und Bekanntmachung des Hinweises auf die Patenterteilung: **17.08.2016**
(21) Anmeldenummer: 10705371.2
(22) Anmeldetag: 25.02.2010
(51) Int. Cl.: C08F 220/18, C09J 133/08, C08F 220/14, C08F 2/38

(54) **(METH)ACRYLATPOLYMERE UND DEREN VERWENDUNG ALS POLYMERGEBUNDENE UV-INITIATOREN ODER ZUSATZ ZU UV-HÄRTBAREN HARZEN**
(METH)ACRYLATE POLYMERS AND THE USE THEREOF AS POLYMER-BOUND UV INITIATORS OR ADDITIVE TO UV-CURABLE RESINS
POLYMÈRES DE (MÉTH)ACRYLATE ET LEUR UTILISATION EN TANT QU'INITIATEURS UV LIÉS À DES POLYMÈRES, OU EN TANT QU'ADDITIFS À DES RÉSINES DURCISSABLES AUX UV

(30) Priorität: 24.03.2009 DE 102009001775
(43) Veröffentlichungstag der Anmeldung: 01.02.2012
(73) Patentinhaber: Evonik Röhm GmbH, 64293 Darmstadt (DE)
(72) Erfinder: SCHMITT, Gerold, 63743 Aschaffenburg (DE); MARTIN, Reinhold, 64732 Bad König (DE); HARTMANN, Patrik, 64572 Buettelborn (DE); KLESSE, Wolfgang, 55127 Mainz (DE); KNEBEL, Joachim, 64665 Alsbach-Hähnlein (DE)
(86) Internationale Anmeldenummer: PCT/EP2010/052384
(87) Internationale Veröffentlichungsnummer: WO 2010/108752

(56) Entgegenhaltungen:
- EP-A1- 1 676 870

## Beschreibung

### Gebiet der Erfindung

Die Erfindung beschreibt (Meth)acrylatpolymere, vorzugsweise Benzophenon-haltige (Meth)acrylatpolymere, zum Einsatz als polymergebundene Photinitiatoren oder in UV-härtbaren Harzen.

### Stand der Technik

Benzophenon und niedermolekulare Benzophenoderivate sind weit verbreitete Photoinitiatoren. Bei Bestrahlung bilden sich Radikale, welche die Polymerisation oder Vernetzung ethylenisch ungesättigter Monomere bewirken können.

Carlini et al. berichten in Polymer, 1983, Vol. 24, May, Seite 599 ff. von Polymeren, die in der Seitenkette Benzophenon-Chromophore enthalten, und von deren Verwendung als hochwirksame Photoinitiatoren. Es werden Copolymere von Acryloxybenzophenon mit Methylacrylat, Methylacrylat oder 1-Acryloxy-2-ethoxyethan offenbart, Die beschriebenen Copolymere weisen ca. 10 bis 90 Mol % an Acryloxybenzophenon-Einheiten auf und eignen sich zur Photoinitiierung der Polymerisation. Eine exakte Spezifizierung des Molekulargewichts der vorgestellten Photoinitiatoren findet in der genannten Veröffentlichung nicht statt.

Aufgrund des bei Carlini et al. beschriebenen Herstellverfahrens (Polymerisation mit AIBN bei 60°C) ist dem Fachmann jedoch sofort klar, dass die Molekulargewichte der Polymeren recht hoch sein müssen und mindestens ein MW von 60.000 resultieren dürfte.

Die US 5,900,472 A beschreibt copolymerisierbare Benzophenon-Derivate zur Verwendung als Photoinitiatoren. Es werden Benzophenonderivate mit zwei bis vier (Meth)acrylat-Gruppen gezeigt sowie UV-härtbare Überzüge vorgestellt, die durch Umsetzung der mehrwertigen Benzophenon-Derivate mit (Meth)acrylat unter Strahlungseinwirkung erhältlich sind. Der US 5,900,472 A zufolge sind die Überzüge, welche unter Einsatz der mehrwertigen Benzophenon-Derivate erhältlich sind, den bis dahin bekannten Überzügen mit bekannten Photoinitiatoren insoweit überlegen, als sie eine verringerte Neigung zum "Ausbluten" zeigen. Bis dato neigte unverbrauchter Photoinitiator zu diesem Phänomen, was seine Anwendung auf wenige Möglichkeiten einschränkte.

Sollen die bekannten Photoinitiatoren als Zusatz zu Druckfarben zur Benutzung von Lebensmittelumverpackungen, wie beispielsweise Tetrapak^{®} s Verwendung finden, so ist natürlich ein potentiell migrierender Photoinitiator wie Benzophenon absolut intolerabel. Daneben kann es auch zu Geruchsproblemen bei Benzophenonen oder bei den Produkten der US 5,900,472 A kommt.

Die polymergebundenen Benzophenone gemäß Carlini et al. können die Viskosität der Druckfarben nachteilig beeinflussen. Eine zu hohe Viskosität kann zu einer gestörten Reaktionskinetik und einer unvollkommenen Aushärtung oder einer verzögerten Aushärtung der Druckfarben führen.

### Aufgabe

In Anbetracht des eingangs genannten und diskutierten Standes der Technik war es Aufgabe der Erfindung, (Meth)acrylatpolymere, vorzugsweise Benzophenon- oder benzopheno-Derivate enthaltende Polymere anzugeben, die sich zur Anwendung als polymere Photoinitiatoren und/oder Zusatz zu photopolymerisierbaren Harzen eignen.

Die Polymere sollen aus einfachen Grundbausteinen mit einfachen Verfahren erhältlich sein.

Daneben sollen die Polymeren möglichst reaktiv sein und sich beim Gebrauch als Photoinitiator möglichst vollständig umsetzen.

Die neuen Polymeren sollen auch bezüglich Ihrer Reaktivität einstellbar oder steuerbar sein.

Außerdem sollen die Polymere nach ihrem Einsatz möglichst wenig zum Ausbluten oder zur Migration neigen. Sie sollen also möglichst dauerhaft beispielsweise in einen resultierenden Überzug oder eine Beschichtung integriert sein.

Die neuen Photoinitiatoren sollen vor allem auch als Zusatz zu UV-härtbaren Druckfarben, vor allem für die Bedruckung von Lebensmittelumverpackungen geeignet sein.

### Lösung

Die erfindungsgemäßen Aufgaben oder Teilaspekte der erfindungsgemäßen Aufgaben werden gelöst durch ein

(Meth)acrylatpolymer erhältlich durch Polymerisation einer Mischung aufweisend
a) 0,1 bis 99,9 Gew.-% wenigstens eines (Meth)acrylats der allgemeinen Formel (I) 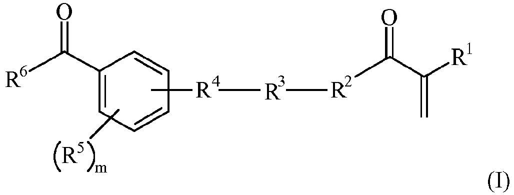
   worin R¹ Wasserstoff oder Methyl bedeutet;
   R² für Sauerstoff oder NH steht;
   R³ für einen Rest der allgemeinen Formel II steht 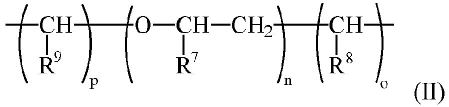
   worin
   R⁷ , R⁸, R⁹ unabhängig voneinander Wasserstoff oder Methyl sind,
   n eine ganze Zahl von Null bis zweihundert ist,
   o und p unabhängig voneinander eine ganze Zahl von Null bis zwei sind, wobei für den Fall, dass die Summe von n und o und p Null ist, R³ eine Bindung ist;
   R⁴ eine Bindung, Sauerstoff, NH, O-CO-O, HN-CO-O, HN-CO-NH oder Schwefel ist;
   R⁵ für Wasserstoff, Halogen oder einen eins bis 20 Kohlenstoffatome aufweisenden Rest steht, der gegebenenfalls mit Sauerstoff, Stickstoff und/oder Schwefel substituiert ist, wobei m für eine ganze Zahl von eins bis fünf steht; und
   R⁶ für einen Aryl- oder Heterocyclylrest steht;
   und
b) 99,9 bis 0,1 Gew.-% eines oder einer Mehrzahl von a) verschiedener mit a) copolymerisierbarer ethylenisch ungesättigter Monomere, wobei die Komponenten a) und b) zusammen 100 Gew.-% der polymerisierbaren Bestandteile der Mischung ergeben, wobei sich das Polymer dadurch auszeichnet, dass das (Meth)acrylatpolymer ein Gewichtsmittel des Molekulargewichts MW im Bereich von größer oder gleich 1.000 g/mol bis kleiner oder gleich 50.000 g/mol aufweist, wobei MW mittels Gelpermeationschromatographie gegen Polymethylmethacrylat-Standards gemessen wird und die Polymerisation in Anwesenheit eines Mercaptans als Kettenregler durchgeführt wird.

Ein derartiges Polymer erlaubt als Photoinitiator oder als Zusatz bei der Härtung von UV-härtbaren Harzen die Schaffung von äußerst vorteilhaften Beschichtungen oder Überzügen. Insbesondere neigt das Polymer als Bestandteil einer UV-härtbaren Druckfarbe nicht zur Migration aus der Lebensmittelumverpackung in das verpackte Lebensmittel. Die erfindungsgemäßen polymergebundenen Photoinitiatoren sind weitestgehend geruchsneutral. Zudem wird beim Einsatz in Druckfarben die Viskosität der Druckfarben durch die üblicherweise den Druckfarben zuzusetzende Menge nicht oder nur unwesentlich beeinflusst, so dass die Aushärtungskinetik nicht gestört wird. Dies wiederum ermöglicht die Anwendung der den erfindungsgemäßen Photoinitiator aufweisenden Druckfarbe auf vorhandenen Standarddruckanlagen.

### Detaillierte Beschreibung der Erfindung

Die Monomerzusammensetzung umfasst ein
oder mehrere (Meth)acrylate a) der allgemeinen Formel (I). Der Anteil der (Meth)acrylate a) an der Monomermischung liegt im Bereich von 0,1 bis 99,9 Gewichtsprozent, bezogen auf das gesamte Gewicht der polymerisierbaren Bestandteile (Summe aus a) und b)).

Zweckmäßig liegen die Monomere der Formel (I) in einer Menge im Bereich von 0,5 bis 50 Gewichtsprozent vor, insbesondere in einer Menge im Bereich von 2,0 bis 35,0 Gewichtsprozent und ganz besonders bevorzugt im Bereich von 5,0 bis 30,0 Gewichtsprozent in der Monomermischung vor, jeweils bezogen auf das gesamte Gewicht der polymerisierbaren Bestandteile (Summe aus a) und b)).

Es versteht sich, dass im Rahmen der Erfindung unter der Schreibweise (Meth)acrylate sowohl Methacrylate oder Acrylate als auch eine Mischung von Methacrylaten und Acrylaten zu verstehen ist.

Beim Monomer a) handelt es sich um wenigstens eine Verbindung der allgemeinen Formel 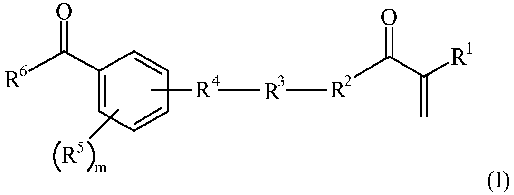
worin R¹ Wasserstoff oder Methyl bedeutet;
R² für Sauerstoff oder NH steht;
R³ für einen Rest der allgemeinen Formel II steht 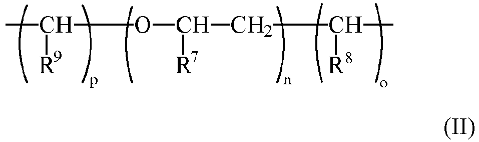
worin
R⁷, R⁸, R⁹ unabhängig voneinander Wasserstoff oder Methyl sind,
n eine ganze Zahl von Null bis zweihundert ist,
o und p unabhängig voneinander eine ganze Zahl von Null bis zwei sind, wobei für den Fall, dass die Summe von n und o und p Null ist, R³ eine Bindung ist;
R⁴ eine Bindung, Sauerstoff, NH, O-CO-O, HN-CO-O, HN-CO-NH oder Schwefel ist;
R⁵ für Wasserstoff, Halogen oder einen eins bis 20 Kohlenstoffatome aufweisenden Rest steht, der gegebenenfalls mit Sauerstoff, Stickstoff und/oder Schwefel substituiert ist, wobei m für eine ganze Zahl von eins bis fünf steht; und
R⁶ für Aryl- oder Heterocyclylrest steht, welcher zweckmäßig in Konjugation mit der benachbarten Carbonylgruppe angeordnet ist;

In einer zweckmäßigen Abwandlung des Verfahrens der Erfindung steht der Rest R¹ für eine Methylgruppe.

In einer weiteren besonders bevorzugten Verfahrensvariante setzt man Verbindungen der Formel (I) ein, worin der Rest R² für Sauerstoff steht.

Besonders zweckmäßig sind auch Verbindungen der Formel (I) worin R¹ für eine Methylgruppe und R² für Sauerstoff steht. In dieser Kombination handelt es sich um Methacryloylreste.

Wie an diesem Beispiel gezeigt, soll auch im Verlauf der weiteren Beschreibung die Kombination und Permutation der bevorzugten oder zweckmäßigen Verfahrensvarianten, insbesondere im Hinblick auf den Einsatz der Verbindung der Formel (I) mit besonders bevorzugten und / oder zweckmäßigen Resten mit als zur Erfindung gehörig und offenbart gelten.

In einer weiteren zweckmäßigen Abwandlung des erfindungsgemäßen Verfahrens setzt man Verbindungen der Formel (I) ein, worin R³ und/oder R⁴ so gewählt sind, dass die Anbindung der polymerisierbaren ethylenisch ungesättigten Funktion über Spacer in Form von Ethylenoxid- oder Propylenoxidresten vornimmt. Zu diesem Zwecke ist es bevorzugt, wenn der Rest R³ so gewählt ist, dass die Summe der Indizes n + o + p größer als Null ist. Besonders zweckmäßig werden o und p Null gewählt, während n eine ganze Zahl größer als Null ist, besonders zweckmäßig größer als fünf und noch mehr bevorzugt größer als zehn.

Die Reste R⁷ bis R⁹ werden in einer zweckmäßigen Variante so gewählt, dass sie allesamt Wasserstoff sind.

Von großem Interesse sind allerdings auch solche Verbindungen der Formel (I), worin die Reste R⁷ bis R⁹ allesamt für Methyl stehen.

Eine besonders günstige Verfahrensvariante erzielt man bei Einsatz von Verbindungen der Formel (I), worin R¹ für Methyl steht, R² für Sauerstoff, R⁴ für eine Bindung, p und o Null sind, R⁷ für Wasserstoff steht und der Index n eine ganze Zahl im Bereich von 1 bis 50, besonders bevorzugt 2 bis 20 und noch mehr bevorzugt 5 bis 10 bedeutet.

Bei R⁵ handelt es sich Wasserstoff, Halogen oder ein bis 20 Kohlenstoffatome aufweisende Reste, die gegebenenfalls mit Sauerstoff, Stickstoff und/oder Schwefel substituiert sind, wobei m für eins bis vier steht.

Besonders zweckmäßige Varianten der Erfindung verwenden Verbindungen der Formel (I) worin alle vier R⁵ für Wasserstoff stehen.

Beim Rest R⁶ handelt es sich um einen Arylrest oder einen Heterocyclylrest. Besonders zweckmäßig ist R⁶ ein Arylrest. Besonders bevorzugt ist R⁶ ein Phenlyrest.

Die Verknüpfung des Reste-Fragmentes -R⁴-R³-R²- mit dem Aromaten kann in o- m- oder p- Position zur Carbonylfunktion am Atomaten erfolgen. Bevorzugt ist die para, also 1-4-Verknüpfung.

In einer besonders zweckmäßigen Abwandlung der Erfindung handelt es sich beim Monomer a) um wenigstens ein Benzophenon(meth)acrylat der allgemeinen Formel (I') 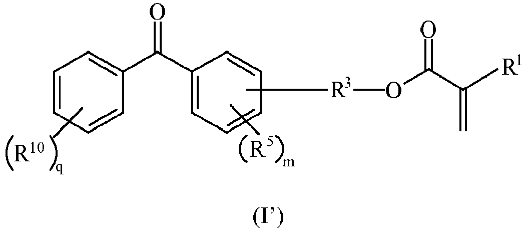
worin R¹, R³ und R⁵ sowie m die oben bei Formel (I) angegebene Bedeutung annehmen können.
R¹⁰ kann unabhängig von R⁵ die Bedeutungen von R⁵ annehmen, nämlich für Wasserstoff, Halogen oder einen eins bis 20 Kohlenstoffatome aufweisenden Rest stehen, der gegebenenfalls mit Sauerstoff, Stickstoff und/oder Schwefel substituiert ist, wobei q für eins bis fünf steht.

Eine ganz besonders bevorzugte Ausführungsform der Erfindung richtet sich auf solche Verfahren, worin als Verbindungen a) solche Verbindungen eingesetzt werden, welche der allgemeinen Formel (I") entsprechen. Hierbei handelt es sich beim Monomer a) um wenigstens ein Benzophenon(meth)acrylat der allgemeinen Formel I" 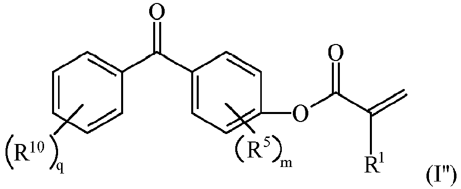 worin R¹, R⁵ und R¹⁰ sowie m und q die bereits bei den Fromeln (I) und (I') angegebenen Bedeutungen besitzen.

Unter Halogen versteht man die Reste Fluor, Chlor, Brom oder Jod.

Zu den Resten, die 1 bis 20 Kohlenstoffatome aufweisen gehören in einer nicht abschließenden Aufzählung unter anderem (C1-C20)-Alkyl, (C2-C20)-Alkenyl, (C2-C20)-Alkinyl, Aryl oder Heterocyclyl, wobei die Aryl- oder Heterocyclyl-Reste unsubstituiert oder mit bis zu drei, im Falle von Fluor auch bis zur Maximalanzahl an gleichen oder verschiedenen Resten versehen sein können und in den genannten Alkyl-, Alkenyl- oder Alkinyl-Resten eine oder mehrere, vorzugsweise bis zu drei nicht benachbarte gesättigte Kohlenstoff-Einheiten durch Heteroatomeinheiten, wie Sauerstoff oder Schwefel ersetzt sein können, und worin darüber hinaus 3 bis 6 Atome dieser gegebenenfalls wie vorstehend modifizierten Kohlenwasserstoff-Reste einen Zyklus bilden können und diese Kohlenwasserstoff-Reste mit oder ohne die angegebenen Variationen, gegebenenfalls mit einem oder mehreren, vorzugsweise bis zu drei, im Falle von Halogen bis zur Maximalanzahl an gleichen oder verschiedenen Resten aus der Reihe Halogen, bevorzugt Fluor, Aryl, Aryloxy, Arylthio, (C3-C8)-Cycloalkoxy, (C3-C8)-Cycloalkylthio, Heterocyclyl, Heterocyclyloxy oder (C1-C2)-Alkoxycarbonyl substituiert sein können, wobei die cycloaliphatischen, aromatischen oder heterocyclischen Ringsysteme unter den soeben genannten Substituenten unsubstituiert oder mit bis zu drei, im Falle von Fluor auch bis zur Maximalanzahl an gleichen oder verschiedenen Substituenten versehen sein können.

Unter dem Ausdruck "(C1-C20)-Alkyl" versteht man einen unverzweigten oder verzweigten Kohlenwasserstoffrest mit 1 bis 20 Kohlenstoffatomen, wie z. B. den Methyl-, Ethyl-, Propyl-, Isopropyl-, 1-Butyl-, 2-Butyl-, 2-Methylpropyl- oder tert.-Butylrest; sowie z. B. den Pentyl-, 2-Methylbutyl-, 1,1-Dimethylpropyl-, Hexyl-, Heptyl-, Octyl-, oder den 1,1,,3 ,3-Tetramethylbutyl-Rest; ,sowie z. B.
den Nonyl-, 1-Decyl-, 2-Decyl-, Undecyl-, Dodecyl-, Pentadecyl- oder Eicosyl-Rest;
unter dem Ausdruck "(C2-C20)-Alkenyl" z. B. die Vinyl-, Allyl-, 2-Methyl-2-propenyl- oder 2-Butenyl-Gruppe; sowie z. B. die 2-Pentenyl-, 2-Decenyl- oder die 2-Eicosenyl-Gruppe;
unter dem Ausdruck "(C2-C20)-Alkinyl" beispielsweise die Ethinyl-, Propargyl-, 2-Methyl-2-propinyl oder 2-Butinyl-Gruppe; sowie z. B. die 2-Pentinyl- oder die 2-Decinyl-Gruppe;
unter dem Ausdruck "Aryl" ein isocyclischer aromatischer Rest mit vorzugsweise 6 bis 14, insbesondere 6 bis 12 C-Atomen, wie beispielsweise Phenyl, Naphthyl oder Biphenylyl, vorzugsweise Phenyl.

Unter dem Ausdruck "Aryloxy" versteht man z. B. die Phenoxy- oder 1- oder 2-Naphthyloxy-Gruppe;
unter dem Ausdruck "Arylthio" versteht man z. B. die Phenylthio- oder 1- oder 2-Naphthylth io-Gruppe;
unter dem Ausdruck "(C3-C8)-Cycloalkoxy" eine Cyclopropyl-, Cyclobutyl-, Cyclopentyl-Cyclohexyl-, Cycloheptyl- oder Cyclooctylgruppe, die über einen Sauerstoff verknüpft ist;
und unter dem Ausdruck"(C3-C8)-Cycloalkylthio" eine Cyclopropyl-, Cyclobutyl-, Cyclopentyl- Cyclohexyl-, Cycloheptyl- oder Cyclooctylgruppe, die über ein Schwefelatom verknüpft ist.

Unter dem Ausdruck "Heterocyclyl" versteht man ein heteroaromatisches oder heteroaliphatisches Ringsystem, wobei unter "heteroaromatisches Ringsystem" ein Arylrest, worin mindestens eine CH-Gruppe durch N ersetzt ist und I oder mindestens zwei benachbarte CH-Gruppen durch S, NH oder O ersetzt sind, zu verstehen ist, z. B. ein Rest von Thiophen, Furan, Pyrrol, Thiazol, Oxazol, Imidazol, Isothiazol, Isoxazol, Pyrazol, 1,3,4-Oxadiazol, 1,3,4-Thiadiazol, 1,3,4-Triazol, 1,2,4-Oxadiazol, I, 2,4-Thiadiatol, 1,2,4-Triazol, 1,2,3-Triazol,
1,2,3,4-Tetrazol, Benzo[blthiophen, Benzo[blfuran, Indol, Benzo[clthiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Pyrazin, Pyrimidin, Pyridazin, 1,3,5-Triazin, 1,2,4-Triazin, 1,2,4,5-Triazin, Chinolin, Isochinolin, Chinoxalin, Chinazolin, Cinnolin, 1,8 -Naphthyridin, 1,5-Naphthyridin, 1,6-Naphthyridin,
I,' I-Naphthyridin, Phthalazin, Pyridopyrimidin, Purin, Pteridin oder 4H-Chinolizin;
unter dem Ausdruck "heteroaliphatisches Ringsystem" einen
Cycloalkylrest in dem mindestens eine Kohlenstoff-Einheit durch O, S oder eine Gruppe NR" ersetzt ist und R" Wasserstoff. (C1-C4)-Alkyl oder Aryl bedeutet;
unter dem Ausdruck "Heterocyclyloxy" einen der oben
genannten heterocyclischen Reste, die über ein Sauerstoffatom verknüpft sind;
und unter (C1-C2)-Alkoxycarbonyl die Methoxycarbonyl- oder Ethoxycarbonylgruppe.

Wie bereits erwähnt kennzeichnen sich in bevorzugter erfindungsgemäßer Ausführungsform die Zusammensetzungen dadurch, dass R¹ Methyl ist.

Von besonderem Interesse sind auch Zusammensetzungen, worin R² Sauerstoff ist.

Von besonderem Interesse sind auch Zusammensetzungen, worin R⁴ für eine Bindung steht.

Von besonderem Interesse sind auch Zusammensetzungen, worin p = o = Null und n eine ganze Zahl zwischen 1 und 20 ist. Für diesen Fall ist es besonders zweckmäßig, wenn R⁷ = Wasserstoff ist.

Alternativ ist es auch bevorzugt, wenn p= o = n = Null ist.

Von besonderem Interesse sind auch Zusammensetzungen, worin alle R⁵ Wasserstoff sind.

Von besonderem Interesse sind auch Zusammensetzungen, worin R⁶ Phenyl ist.

Ganz besonders zweckmäßig wird als Komponente a) zur Erzeugung eines Polymeren B) für die erfindungsgemäße Zusammensetzung das Methacryloyloxybenzophenon oder Benzophenonmethacrylat eingesetzt.

Die Verbindungen der Formeln (I), (I') und (I") sind entweder käuflich zu erhalten oder werden nach literaturbekannten Verfahren hergestellt. Zu den möglichen Verfahren der Herstellung gehört beispielsweise die Umesterung von (Meth)acrylaten mit den entsprechenden Alkoholen oder Alkoholprecursor-Verbindungen.

Die Monomerzusammensetzung umfasst weiterhin ein oder mehrere ethylenisch-ungesättigte Comonomere b), die sich mit a) copolymerisieren lassen, von diesen jedoch verschieden sind. Der Anteil der Comonomere liegt bevorzugt im Bereich von 99,9 bis 0,01 Gew.-%, insbesondere 50,0 bis 99,5, zweckmäßig 65,0 bis 98,0 Gew.-% und besonders bevorzugt 70,0 bis 35,0 Gew.-%, bezogen auf das Gewicht der polymerisierbaren Bestandteile (Summe der Gewichte von a) + b)).

In diesem Zusammenhang geeignete Comonomere b) entsprechen beispielsweise der Formel (III): 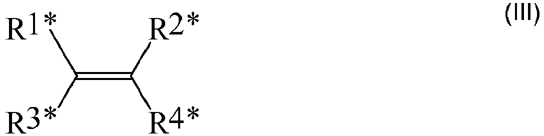 worin R^{1*} und R^{2*} jeweils unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; Arylgruppen mit 6 bis 24 Kohlenstoffatomen, welche mit 1 bis (2n-1) Halogenatomen, vorzugsweise Chlor, und/oder Alkylgruppen mit 1 bis 6 Kohlenstoffatomen substituiert sein können, wobei n die Zahl der Kohlenstoffatome der Arylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind;
worin R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)_{n'}, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Hierzu gehören unter anderem:
Aryl(meth)acrylate, wie Benzylmethacrylat oder
   Phenylmethacrylat, wobei die Arylreste jeweils unsubstituiert oder bis zu vierfach substituiert sein können;
Methacrylate von halogenierten Alkoholen, wie
   2,3-Dibromopropylmethacrylat,
   4-Bromophenyl methacrylat,
   1,3-Dichloro-2-propylmethacrylat,
   2-Bromoethylmethacrylat,
   2-Iodoethylmethacrylat,
   Chloromethylmethacrylat;
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Maleinsäureanhydrid, Methylmaleinsäureanhydrid, Maleinimid, Methylmaleinimid;
Fumarsäure und Fumarsäurederivate;
Acrylsäure und (Meth)acrylsäure;
Diene wie beispielsweise Divinylbenzol.

Hydroxyalkyl(meth)acrylate, wie
   3-Hydroxypropylmethacrylat,
   3,4-Dihydroxybutylmethacrylat,
   2-Hydroxyethylmethacrylat,
   2-Hydroxypropylmethacrylat,
   2,5-Dimethyl-1,6-hexandiol(meth)acrylat,
   1,10-Decandiol(meth)acrylat;
carbonylhaltige Methacrylate, wie
   2-Carboxyethylmethacrylat,
   Carboxymethylmethacrylat,
   Oxazolidinylethylmethacrylat,
   N-(Methacryloyloxy)formamid,
   Acetonylmethacrylat,
   N-Methacryloylmorpholin,
   N-Methacryloyl-2-pyrrol id inon,
   N-(2-Methacryloyloxyethyl)-2-pyrrolidinon,
   N-(3-Methacryloyloxypropyl)-2-pyrrolidinon,
   N-(2-Methacryloyloxypentadecyl)-2-pyrrolidinon,
   N-(3-Methacryloyloxyheptadecyl)-2-pyrrolidinon;
Glycoldimethacrylate, wie
   1,4-Butandiolmethacrylat,
   2-Butoxyethylmethacrylat,
   2-Ethoxyethoxymethylmethacrylat,
   2-Ethoxyethylmethacrylat;
Methacrylate von Etheralkoholen, wie
   Tetrahydrofurfurylmethacrylat,
   Vinyloxyethoxyethylmethacrylat,
   Methoxyethoxyethylmethacrylat,
   1-Butoxypropylmethacrylat,
   1-Methyl-(2-vinyloxy)ethylmethacrylat,
   Cyclohexyloxymethylmethacrylat,
   Methoxymethoxyethylmethacrylat,
   Benzyloxymethylmethacrylat,
   Furfurylmethacrylat,
   2-Butoxyethylmethacrylat,
   2-Ethoxyethoxymethylmethacrylat,
   2-Ethoxyethylmethacrylat,
   Allyloxymethylmethacrylat,
   1-Ethoxybutylmethacrylat,
   Methoxymethylmethacrylat,
   1-Ethoxyethylmethacrylat,
   Ethoxymethylmethacrylat und ethoxylierte (Meth)acrylate, die bevorzugt 1 bis 20, insbesondere 2 bis 8 Ethoxygruppen aufweisen;
Aminoalkyl(meth)acrylate und Aminoalkyl(meth)acrylatamide, wie
   N-(3-Dimethylaminopropyl)methacrylamid,
   Dimethylaminopropylmethacrylat,
   3-Diethylaminopentylmethacrylat,
   3-Dibutylaminohexadecyl(meth)acrylat;
Nitrile der (Meth)acrylsäure und andere stickstoffhaltige Methacrylate, wie
   N-(Methacryloyloxyethyl)diisobutylketimin,
   N-(Methacryloyloxyethyl)dihexadecylketimin,
   Methacryloylamidoacetonitril,
   2-Methacryloyloxyethylmethylcyanamid,
   Cyanomethylmethacrylat;
heterocyclische (Meth)acrylate, wie
   2-(1-Imidazolyl)ethyl(meth)acrylat,
   2-(4-Morpholinyl)ethyl(meth)acrylat und
   1-(2-Methacryloyloxyethyl)-2-pyrrolidon;
Oxiranylmethacrylate, wie
   2,3-Epoxybutylmethacrylat,
   3,4-Epoxybutylmethacrylat,
   10,11-Epoxyundecylmethacrylat,
   2,3-Epoxycyclohexylmethacrylat,
   10,11-Epoxyhexadecylmethacrylat; sowie
   Glycidylmethacrylat;
Zu besonders geeigneten Comonomeren b) gehören unter anderem Methacrylate, Acrylate, Styrole und Mischungen, die zwei oder mehr Komponenten der vorgenannten Gruppen umfassen. Beispiele für (Meth)acrylate sind Methyl(meth)acrylat, Ethyl(meth)acrylat, Propyl(meth)acrylat, Isopropyl(meth)acrylat, Butyl(meth)acrylat, Isobutyl(meth)acrylat, Hexyl(meth)acrylat, Ethylhexyl(meth)acrylat,
   Cyclohexyl(meth)acrylat, Tetrahydrofurfuryl(meth)acrylat, Isobornyl(meth)acrylat, Benzyl(meth)acrylat, Phenyl(meth)acrylat, Phenylethyl(meth)acrylat), 3,3,5-Trimethylcyclohexyl(meth)acrylat, Hydroxethyl(meth)acrylat,
   Hydroxypropyl(meth)acrylat, Methyl- oder Ethyltriglykolmethacrylat,
   Butyldiglykolmethacrylat, Ethylenglykoldi(meth)acrylat sowie
   Diethylenglykoldi(meth)acrylat, Triethylenglykoldi(meth)acrylat und deren höheren Homologe, Dipropylenglykoldi(meth)acrylat, Tripropylenglykoldi(meth)acrylat und deren höheren Homologe,1,3- und 1,4-Butandioldi(meth)acrylat, 1,6-Hexandioldi(meth)acrylat, 1,12-Dodecandioldi(meth)acrylat, Glycerindi(meth)acrylat,
   Trimethylolpropantri(meth)acrylat, Trimethylolpropandi(meth)acrylat, Tri(meth)acrylat eines ethoxilierten Trimethylolpropan mit 3 - 10 Mol Ethylenoxid, Di(meth)acrylat eines ethoxilierten Bisphenol-A mit 2 - 20 Mol Ethylenoxid, bevorzugt 2-10 Mol Ethylenoxid und / oder einem Polyethylenglykoldimethacrylat mit 1 - 15 Ethylenoxid-Einheiten und Allyl(meth)acrylat. Weitere Beispiele sind (Meth)acrylsäure, (Meth)acrylamid, N-Methylol(meth)acrylamid, Monoester der Malein- und Bernsteinsäure mit Hydroxyethylmethacrylat und der Phosphorsäureester von Hydroxyethyl(meth)acrylat, deren Anteil meist untergeordnet ist.

Es versteht sich ferner, dass zur Erzeugung eines erfindungsgemäßen Polymeren auch mehrere Sorten von Monomeren b) einsetzbar sind. So kann das erfindungsgemäße Polymer auch durch Polymerisation von zwei oder mehreren voneinander verschiedenen Monomeren der Sorte b) erhalten werden.

Von besonderem Interesse für die Erfindung sind Polymere, welche dadurch gekennzeichnet sind, dass die Komponente b) aus (Meth)acrylatmonomeren ausgewählt ist. Hierbei ist es ganz besonders bevorzugt, dass die Komponente b) Methylmethacrylat ist.

In einer weiteren Ausführungsform ist es bevorzugt, dass die Komponente b) n-Butylmethacrylat aufweist.

Besondere erfindungsgemäße Polymere sind auch erhältlich unter Einsatz einer Komponente b) die ausgewählt ist aus (Meth)acrylaten mit 3 bis 5 Kohlenstoffatomen in der Estergruppe. Hierzu zählen unter anderem Propylmethacrylat, n-Butylmethacrylat, tert.-Butylmethacrylat und n-Pentylmethacrylat. Von den genannten Monomeren ist n-Butylmethacrylat besonders bevorzugt.

Besondere erfindungsgemäße Polymere sind ebenfalls dadurch ausgezeichnet, dass b) eine Mischung von Monomeren ist aufweisend Methylmethacrylat und n-Butylmethacrylat.

Ganz besonders bevorzugte erfindungsgemäße Polymere sind erhältlich durch Copolymerisation von Benzophenonmethacrylat, Methylmethacrylat und n-Butylmethacrylat.

Die erfindungsgemäßen Polymeren werden durch radikalische Polymerisation erhalten. Die übliche freie radikalische Polymerisation ist unter anderem in Ullmanns' Encyclopedia of Industrial Chemistry, Sixth Edition ausführlich beschrieben.

Im Rahmen der vorliegenden Erfindung wird die Polymerisation unter Verwendung mindestens einen Polymerisationsinitiators für die radikalische Polymerisation gestartet. Hierzu gehören unter anderem die in der Fachwelt weithin bekannten Azoinitiatoren, wie 2,2'-Azobisisobutyronitril, 2,2'-Azobis-(2,4-dimethylvaleronitril) und 1,1-Azobiscyclohexancarbonitril, organische Peroxide, wie Dicumylperoxid, Diacylperoxide, wie Dilauroylperoxid, Peroxydicarbonate, wie Diisopropylperoxydicarbonat, Perester, wie tert. Butylperoxy-2-ethylhexanoat, und dergleichen.

Für die Zwecke der vorliegenden Erfindung ganz besonders geeignete Polymerisationsinitiatoren umfassen insbesondere die folgenden Verbindungen:
Methylethylketonperoxid,
Acetylacetonperoxid,
Dilauroylperoxid,
tert.-Butylper-2-ethylhexanoat,
Keton peroxid,
tert-Butylperoctoat,
Methylisobutylketonperoxid,
Cyclohexanonperoxid,
Dibenzoylperoxid,
tert.-Butylperoxybenzoat,
tert.-Butyl peroxyisopropylcarbonat,
2,5-Bis-(2-ethylhexanoyl-peroxy)-2,5-dimethylhexan,
tert.-Butylperoxy-2-ethylhexanoat,
tert.-Butyl peroxy-3,5,5-trimethylhexanoat,
Dicumylperoxid,
1,1-Bis-(tert.-butylperoxy)-cyclohexan,
1,1-Bis-(tert.-butylperoxy)-3,3,5-trimethylcyclohexan,
Cumylhydroperoxid,
tert.-Butylhydroperoxid,
Bis-(4-tert.-butylcyclohexyl)-peroxydicarbonat,
2,2'-Azobisisobutyronitril,
2,2'-Azobis-(2,4-dimethylvaleronitril),
1,1-Azobiscyclohexancarbonitril,
Diisopropylperoxydicarbonat,
tert. Amylperoxypivalat,
Di-(2,4-dichlorbenzoyl)-peroxid,
tert. Butylperoxypivalat,
2,2'-Azobis-(2-amidinopropane)-dihydrochlorid,
Di-(3,5,5-trimethyl-hexanoyl)-peroxid,
Dioctanoylperoxid,
Didecanoylperoxid,
2,2'-Azobis-(N,N'-dimethylenisobutyramidin) Di-(2-methylbenzoyl)-peroxid,
Dimethyl-2,2'-azobisisobutyrat,
2,2'Azobis-(2-methylbutyronitril),
2,5-Dimethyl-2,5-di-(2-ethylhexanoylperoxy)-hexan,
4,4'-Azobis-(cyanopentansäure) Di-(4-methylbenzoyl)-peroxid,
Dibenzoylperoxid,
tert. Amylperoxy-2-ethylhexanoat,
tert. Butylperoxy-2-ethylhexanoat,
tert. Butylperoxy-isobutyrat
sowie Mischungen der zuvor genannten Polymerisationsinitiatoren.

Die erfindungsgemäßen Polymeren können in Substanz oder auch in Lösung erhalten werden. Bevorzugt jedoch ist ihr Erhalt durch Polymerisation nach dem Suspensionspolymerisationsverfahren, der so genannten Perlpolymerisation. Bei direkten Suspensionspolymerisations-Verfahren werden wasserunlösliche Monomere in Wasser durch mechanisches Rühren suspendiert. Die Polymerisation wird in den Monomer-Tröpfchen durch Zugabe eines "öllöslichen" Initiators gestartet. Das Zusammenkleben der Tröpfchen (und damit die Koagulation der Suspension) wird durch "Schutzkolloide" (=Suspendiermittel) wie z. B. Ba2SO4, Poly(vinylalkohol) o.a. verhindert. Nach Beendigung der Polymerisation liegt das Polymer in Form kleiner Kügelchen (50 - 400 µm) in Wasser dispergiert vor. Bei dieser "wassergekühlten Substanzpolymerisation" treten keine Wärmeprobleme auf und es müssen keine organischen Lösungsmittel aus dem polymeren Produkt entfernt werden. Das so gewonnene "Perlpolymerisat" kann häufig ohne Granulierung weiterverarbeitet werden.

Die Polymerisation wird in Anwesenheit eines Mercaptans als Kettenregler durchgeführt wird.

Mercaptane werden als Kettenregler eingesetzt, wie beispielsweise n-Butylmercaptan, n-Dodecylmercaptan, 2-Mercaptoethanol, 2-Ethylhexylthioglycolat oder Pentaerythrittetrathioglycolat; wobei der Kettenüberträger vorzugsweise in Mengen von 0,05 bis 5,0 Gew.-%, bevorzugt in Mengen von 0,1 bis 2,0 Gew.-% und besonders bevorzugt in Mengen von 0,2 bis 1,0 Gew.-%, jeweils bezogen auf die Gesamtmasse der ethylenisch-ungesättigten Verbindungen, eingesetzt wird. In diesem Zusammenhang kann der Fachmann der Fachliteratur, insbesondere den Druckschriften H. Rausch-Puntigam, T. Völker "Acryl- und Methacrylverbindungen" Springer, Heidelberg, 1967; Houben-Weyl "Methoden der organischen Chemie" Bd. XIV/1, S. 66ff., Georg Thieme, Heidelberg, 1961 und Kirk-Othmer "Encyclopedia of Chemical Technology" Vol. 1, S. 296ff., J. Wiley, New York, 1978, entnehmen. Im Rahmen der vorliegenden Erfindung wird die Verwendung von 2-Ethylhexylthioglycolat oder Pentaerythrittetrathioglycolat als Kettenüberträger oder Regler ganz besonders bevorzugt. Diese werden in einer bevorzugten Ausführungsform in einer Menge von 0,05 bis 5 Gew.-% eingesetzt, bezogen auf die Gesamtmasse der Komponenten a) und b).

Das Molekulargewicht des erfindungsgemäßen Benzophenon(meth)acrylat-haltigen Copolymeren ist kritisch. Das Gewichtsmittel des Molekulargewichts MW liegt im Bereich von größer oder gleich 1.000 g/mol bis kleiner oder gleich 50.000 g/mol. Liegt das MW unterhalb von 1.000 g/mol, kann es zu Geruchsbelästigungen durch den Photoinitiator kommen. Außerdem ist die Migrationssicherheit unter Umständen nicht ausreichend. Liegt das MW oberhalb von 50.000 g/mol, so wird die Viskosität einer Druckfarbe zu hoch, so dass es entweder zu einer gestörten Reaktionskinetik des Härtungsvorganges kommt oder aber der Zusatz von beispielsweise Reaktivverdünnern (Monomeren) zur Druckfarbenformulierung nötig wird, mit den bekannten Folgeproblemen. Im Rahmen der vorliegenden Erfindung wählt man die Mengen an Monomeren, Polymerisationsinitiator, Kettenüberträger und gegebenenfalls Lösungsmittel vorzugsweise derart, dass ein Gewichtsmittel des Molekulargewichtes im Bereich von 1.000 und 20.000 g/mol, vorzugsweise im Bereich von 1.000 und 10.000 g/mol, bevorzugt im Bereich von 1.500 bis kleiner als 10.000 g/mol, zweckmäßigerweise im Bereich von 2.000 bis 3.500 g/mol, insbesondere im Bereich von 2.500 bis 3.500 g/mol erhalten wird. Besonders bevorzugt sind auch Molekulargewichte kleiner als 5.000 g/mol. Diese Werte beziehen sich jeweils auf das Gewichtsmittel des Molekulargewichts (Mw).

Die Molekulargewichte können nach bekannten Methoden bestimmt werden. Beispielsweise kann die Gelpermeationschromatographie, auch bekannt unter "Size Exclusion Chromatography" (SEC) eingesetzt werden. Ebenso ist ein osmometrisches Verfahren, wie beispielsweise die "Vapour Phase Osmometry" zur Bestimmung der Molekulargewichte einsetzbar. Die genannten Verfahren sind beispielsweise beschrieben in: P.J. Flory, "Principles of Polymer Chemistry" Cornell University Press (1953), Chapter VII, 266-316 sowie "Macromeolecules, an Introduction to Polymer Science", F.A. Bovey and F.H. Winslow, Editors, Academic Press (1979), 296-312 sowie W.W. Yau, J.J. Kirkland and D.D. Bly, "Modern Size Exclusion Liquid Chromatography, John Wiley and Sons, New York, 1979. Bevorzugt wird zur Bestimmung der Molekulargewichte der hierin vorgestellten Polymere die Gelpermeationschromatographie eingesetzt. Es wird gegen Polymethylacrylat-Standards gemessen.

Die Glasübergangstemperatur der erfindungsgemäßen polymergebundenen Benzophenone können über einen bestimmten Bereich variieren. Die Glasübergangstemperaturen liegen zweckmäßig bei Tg > 40°C bestimmt mittels DSC nach DIN EN/SO 6721-2. Liegt Tg unterhalb von 40°C, kann eine größere Menge eines polymergebundenen Initiators bei der Anwendung in einer Druckfarbe oder in einem Überzug dessen Härte nachteilig beeinflussen. Bevorzugt im Rahmen der Erfindung sind Glasübergangstemperaturen Tg von > 50°C, noch mehr bevorzugt von > 60°C.

Die Polymerisation zum Erhalt der erfindungsgemäßen Polymere kann bei Normaldruck, Unter- oder Überdruck durchgeführt werden. Auch die Polymerisationstemperatur ist unkritisch. Im Allgemeinen liegt sie jedoch im Bereich von -20° - 200°C, vorzugsweise im Bereich von 0° - 180°C, günstiger Weise im Bereich von 50° - 180°C, besonders bevorzugt im Bereich von 50° - 130°C, und insbesondere im Bereich von 60° - 120°C.

Die Polymerisation wird vorzugsweise bei einer konstanten Reaktionstemperatur durchgeführt, welche während der gesamten Polymerisationsreaktion vorzugsweise um weniger als +-20 °C, besonders bevorzugt um weniger als +-10 °C, insbesondere um weniger als +- 5°C, um die gewünschte Temperatur schwankt.

Zu diesem Zweck wird das Polymerisationsgefäß vorzugsweise mit einem
Medium umgeben, welches die entstehende Polymerisationswärme
möglichst rasch und gut abführen kann. Zur weiteren Verringerung von Temperaturschwankungen hat es sich als überaus günstig erwiesen, die Temperatur im Polymerisationsgefäß durch die Zugabegeschwindigkeit
des Polymerisationsinitiators zu steuern, indem man zur
Temperaturerhöhung die Zugabegeschwindigkeit des
Polymerisationsinitiators kurzzeitig erhöht und zur Temperaturverringerung
die Zugabegeschwindigkeit des Polymerisationsinitiators kurzzeitig
erniedrigt.

Weiterhin wird günstiger Weise derart verfahren, dass man die die
ethylenisch-ungesättigten Verbindungen umfassende Reaktionsmischung
in einem Reaktionsgefäß vorlegt, die Reaktionsmischung unter
Verwendung eines geeigneten Temperiermediums bei der gewünschten Polymerisationstemperatur solange temperiert, bis die Reaktionsmischung die gewünschte Polymerisationstemperatur aufweisen, die Polymerisation durch Zugabe oder Zudosierung des Polymerisationsinitiators startet und direkt nach der Zugabe oder direkt nach dem Beginn der Zudosierung des Polymerisationsinitiators die Temperatur des Temperiermediums gegenüber der zuvor eingestellten Temperatur, vorzugsweise um 2 bis 10 °C, insbesondere um 5 bis 10 °C, erniedrigt.

Das erfindungsgemäße Copolymere lässt sich besonders zweckmäßig als UV-Initiator für Polymerisationsreaktionen einsetzen. Hierbei kann es von besonderem Vorteil, wenn das Polymer als Lösung in einem Reaktivverdünner vorliegt. Unter Reaktivverdünnern versteht man in diesem Zusammenhang solche Medien, die einerseits in der Lage sind den polymergebundenen UV-Initiator zu lösen und andererseits während einer Polymerisationsreaktion, die durch den polymeren UV-Initiator ausgelöst wird, an der Umsetzung teilzunehmen und in die herzustellenden Polymeren einpolymerisiert werden. Ganz besonders zweckmäßige Reaktivverdünner für die Anwendung des Polymeren gemäß der Erfindung umfassen beispielsweise mehrwertige (Meth)acrylate. Zu den in Frage kommenden mehrwertigen (Meth)acrylaten gehören unter anderem Di- oder Triacrylate. Ganz besonders bevorzugt ist beispielsweise Tripropylenglykoldiacrylat. Die Konzentration der gebrauchsfertigen Lösung lässt sich in Abhängigkeit von der erwünschten Reaktivität des UV-Initiators leicht an den gewünschten Einsatzzweck anpassen. Konzentrationen im Bereich von 10 bis 70 Prozent (w/w) haben sich als günstig herausgestellt. Besonders bevorzugt sind 20 bis 50 prozentige Lösung (w/w) in vorzugsweise Tripropylenglykoldiacrylat.

Die Geschwindigkeit der Initiierung/Vernetzung lässt sich besonders vorteilhaft durch kombinierte Anwendung mit einem Beschleunigeramin weiter verbessern oder an die gewünschten Zielgeschwindigkeiten anpassen.

In einer bevorzugten Ausführungsform der Erfindung wird das erfindungsgemäße Bezophenon-haltige Polymer in Kombination mit einem Amin zusammen angewendet, wobei das Amin ausgewählt ist aus der Gruppe der niedermolekularen Amine, polymeren Amine und polymerisierbaren Amine.

Besonders zweckmäßig ist die gemeinsame Verwendung mit NDEA (N-Methyl-Diethanolamin) oder auch mit DMAEMA (2-Diethylaminoethylmethacrylat).

Bevorzugt kann der erfindungsgemäße polymergebundene Initiator mit Erfolg auch als Zusatz zu UV-härtbaren Harzen eingesetzt werden, insbesondere als Zusatz zu Druckfarben.

Eine im Rahmen der Erfindung günstige Zusammensetzung einer Druckfarbe umfasst:
A.) Farbmittel, B.) UV-härtbare Bindemittel, C.) übliche Hilfsstoffe wie Mittel zur Beeinflussung der Rheologie, der Trocknung, des Glanzes sowie der Oberflächenhärte und D.) bezogen auf die Summe des Gewichts aus A.) bis D.) 0,1 bis 30 Gew.-% eines polymergebundenen Initiators der Erfindung.

Eine besonders zweckmäßige Druckfarbenvariante umfasst gemäß der Erfindung
A) 10 - 40 Gew.-% Farbmittel:
B) 10 - 50 Gew.-% Bindemittel;
C1) 20 - 80 Gew.-% Löse- oder Verdünnungsmittel
C2) 0 - 10 Gew.-% übliche von C1) verschiedene Hilfsstoffe und
D) 0,5 - 25 Gew.-% eines polymergebundenen UV-Initiators / -Vernetzers gemäß der Erfindung.

Besonders bevorzugt ist eine Zusammensetzung umfassend die Komponenten A) bis D) in folgenden Mengen:
A) etwa 20 Gew.-%;
B) 29-40 Gew.-%;
C1) etwa 15 Gew.-%;
C2) 9-26 Gew.-%; und
D) 10-16 Gew.-%.

Eine spezielle Zusammensetzung umfasst:

| | | |
|---|---|---|
| 33-39 | Gew.-% | Reaktivverdünner; |
| 15 | Gew.-% | Thixotropie-Paste; |
| 20 | Gew.-% | Mattierungspaste; |
| 3 | Gew.-% | Photoinitiator für Weiß; |
| 5 | Gew.-% | UV-Luminiszens-Paste; |
| 3 | Gew.-% | Anti Toning Mittel; |
| 5 | Gew.-% | UV-Additive; und |
| 10-16 | Gew.-% | polymergebundener UV-Initiator gemäß der Erfindung |

Hierbei ist der polymergebundene Photoinitiator besonders zweckmäßig so beschaffen, dass er einen Gehalt von etwa 5 Gew.-% Benzophenon repräsentiert, bezogen auf die gesamte Druckfarbenrezeptur.

Zu den mit sehr gutem Erfolg einsetzbaren Farbmitteln A) gehören unter anderem anorganische Pigmente wie Mineralpigmente, z. B. Miloriblau, Titanweiß, EisenoxidPigmente; wie Metallpigmente, z. B. Aluminiumpulver (Silberbronze PM1), Messingpulver (Goldbronze PM2), Cu-Zn-Legierungen, Kupferbronze; wie Interferenzpigmente, z. B. Perlmutt-, Perlglanzpigmente und feuergefärbte Bronzen; wie Kohlenstoffpigmente, z. B. Pigmentruße, Farbruße, jeweils grob- und/oder feinkörnig; organische Pigmente wie Azo-Pigmente, Kupplungen aus Mono- und Diazoverbindungen und verlackt, Isoindolin-Pigmente, Phthalocyanin-Pigmente, Spezialpigmente auf Basis polyzyklischer Verbindungen, z. B. auf Basis von Dioxazin-, Chinacridon-, Indanthren- und Isoindolinonderivaten; Salze basischer Farbstoffe, z. B. Fanal^{®}-Typen der BASF, Alkali-, Reflexblau^{®} (Höchst-Typ); Luminiszenzpigmente; Fluoreszenzpigmente; nachleuchtende Pigmente; sowie organische lösliche Farbstoffe, vorwiegend für den Flexodruck, Farbbasen wie z. B. Viktoriablau-B-Base, Nigrosin-B-Base; und Metallkomplexfarbstoffen, wie z. B. Zapon^{®}- oder Neozapon^{®}-Farbstoffen.

Zu den zweckmäßig einzusetzenden Bindemitteln B) gehören in nicht abschließender Aufzählung unter anderem:
Fette, oxidativ trocknende oder auch nicht trocknende Öle und daraus hergestellte Alkydharze, wie z. B. fette trocknende Öle pflanzlicher Herkunft, z. B. Leinöl, Holzöl, Sojaöl, Ricinenöl, Tallöl und deren Derivate (anpolymerisierte, hydrierte oder dehydratisierte Öle, Öl-Harz-Verkochungen, Fettsäure-modifizierte Alkydharze (Phthalsäure + Glycerol + trocknende Öle), freie Fettsäuren, Fettalkohole usw.), Blattgoldfirnis (durch längeres Erhitzen von Leinöl);
Lösungen oder Dispersionen modifizierter Naturharze und synthetischer Harze in Mineralölen oder pflanzlichen Ölen, wie z. B. Balsamharze und Wurzelharze und deren Derivate (Harzester, Hartharze, Erdalkaliresinate, Zinkresinate), Phenol- und Maleinatmodifizierte Naturharze, synthetische Harze, wie Cumaron-, Inden-, Cyclopentadienharze, KW (Kohlenwasserstoff) Harze, hochviskose Mineralölprodukte und Terpenharze; fossile Naturstoffe, wie Naturasphalt und Dest.-Rückstände aus Naturharz, Tallöl, Mineralöle, Teeröle und deren Fettsäure-Verarbeitungsprodukte; sowie Gilsonit-Asphalt;
Kolophonium-Derivate in Form von Phenol-Harzen, Ca/Mg- und Zn-Salzen, Kohlenwasserstoffharze, Cellulose-Derivate;
dünnflüssige Lösungen von Kunstharzen, modifizierten Natur- und Naturharzen, wie z. B. Nitrocellulose und Kombinationen mit entsprechenden Harzen und Weichmachern; Kombinationsharzen: Ethylcellulose, Ethylhydroxyethylcellulose, Celluloseester, Carboxymethylcellulose, Kolophoniumester, Maleinsäure-modifizierte Kolophoniumharze (Maleinatharze); Polymerisate und Mischpolymerisate von Vinylacetat, Vinylchlorid, Vinylidenchlorid, Styrol, Methylstyrol, Cyclopentadien, Acrylaten, Methacrylaten, Maleinsäureestern, Vinylacetalen, Vinylalkohol, Vinylpyrolidone, Butadien; Polyadditionsharze wie Polyurethane, Epoxide;
Polykondensationsharze, wie Polyester, Polyamide, aliphatische und aromatische Keton-Harze, Melamin-Harnstoffharze, Melamin-Formaldehyharze, Casein.

Zu mit Erfolg einsetzbaren Löse- und/oder Verdünnungsmitteln gehören u.a. Kohlenwasserstoffe, Mineralöle, Alkohole, Glycole, Glycolether, Ester, Ketone, Wasser; insbesondere Ethanol, vergällt mit Methylethylketon oder Cyclohexan, Ethylacetat, 2-Propanol, 1-Methacryl-2-propanol, 1-Ethoxy-2-propanol, Wasser Aceton, Benzine einschließlich Cycloaliphaten, Dipropylenglycolmonomethylether, Ethoxypropylacetat, Isopropylacetat, Methoxypropylacetat, Methylethylketon, Methoxypropylketon, 1-Propanol, Propylacetat, Propylenglycol, Diacetonalkohol, Cyclohexanon, Methylisobutylketon, Toluol und/oder Xylol.

Zu zweckmäßigen Hilfsstoffen gehören u.a. Füllstoffe wie Calciumcarbonat (Kreide PW18), Aluminiumoxidhydrat (PW24), Bariumsulfat (PW21 -Schwerspat), Siliciumdioxid (Kieselsäure SiO₂ PW27), Aluminiumsilicat (Kaolin PW19) oder Magnesiumsilicat (Talkum PW26) oder Mischungen von zwei oder mehreren der vorstehend genannten Füllstoffe;
Wachse, z. B. Naturwachse wie Carnaubawachs oder Ozokeritwachs; synthetische Wachse, wie PE-Wachse, oxidierte Carboxy-Gruppen-haltige PE-Wachse, fluorierte Wachse, PTFE-Wachse, Petroleumwachse, Paraffingele, Ceresinwachs;
Fettsäureamide, wie z. B. Ölsäureamid oder Stearinsäureamid;
Weichmacher, wie z. B. Produkte natürlicher (z. B. Ricinusöl; epoxidiertes Sojaöl) oder synthetischer Herkunft wie Phthalsäureester (Dibutylphthalat (DBP), Diisobutoylphthalat (DiBP), Dioctylphthalat (DOP), Diisooctylphthalat (DiDP), Dicyclohexylphthalat, Diisononylphthalat), Abietate, Benzoate, Adipate, Sebacate, Phosphate und/oder Alkydharze;
Trockenstoffe wie z. B. Flüssigtrockner, wie öllösliche Metallseifen (Octanoate, Resinate, Naphthenate, Tallate, Linoleate), wie z. B. Trockenpasten (Dispersionen von anorganischen Salzen in Ölen; Mg-Salze in Leinölfirnissen gemahlen);
Trocknungsverzögerer-Antioxidantien, wie z. B. Oxine, substituierte Phenole, aromatische Amine und Naphthole;
Netzmittel wie z. B. anionische Netzmittel, z. B. Salze von Säuren, insbesondere Fettsäuren; kationische Netzmittel, z. B. quartäre Ammoniumverbindungen;
nichtionische Netzmittel, wie ethoxylierte Alkylphenole; und amphotere Netzmittel wie z. B. Alkyldimethylbetain;
Neutralisationsmittel wie z. B. Acrylate, Ammoniak oder Aminoalkohole;
Fungizide und Bakterizide;
Vernetzer, z. B. Polyisocyanate oder Polyacridine, Photoinitiatoren, die von D) verschieden sind;
Antischaummittel, Komplexbildner und andere Additive.

Die nachfolgenden Beispiele dienen zur weiteren Erläuterung der Erfindung

Herstellung von (Meth)acrylatpolymeren, vorzugsweise Benzophenon-haltig Beispiele und Vergleichsbeispiele 1 bis 11.

### Allgemeine Durchführung der Polymerisation

In einer Apparatur bestehend aus einem 2 L-Rettberg-Reaktor mit Rührmotor und Metallblatt-Rührer, Rückflusskühler, N₂-Überleitung, Wasserbadthermostat sowie Thermoelement werden die nachfolgenden Mengen für jeweils ca. 500 g Perlpolymerisate angesetzt.

Die konkreten Zahlenwerte betreffen das Beispiel 9.

Die Mengen für die Versuche 1 bis 8 sowie 10 und 11 sind entsprechend den in der Tabelle 1 angegebenen Verhältnissen abzuwandeln.

### Phasenverhältnis H₂O:Monomeres = 2,0 : 1

### Monomerphase:

| | | | | |
|---|---|---|---|---|
| MMA | 300,0 g | = | 60 | % d. Monomere |
| n-BMA | 75,0 g | = | 20 | % d. Monomere |
| BPMA¹ | 100,0 g | = | 10 | % d. Monomere |
| Regler² | 25,0 g | = | 10 | % d. Monomere |
| Initiator³ | 0,5 g | = | 0,10 | % d. Monomere |

### Wasserphase:

| | | | | |
|---|---|---|---|---|
| H₂O dest. | 941,5 g | | | |
| Al₂(SO₄)₃*14 H₂O | 10,0 g | = | 2,0 | % d. Monomere |
| Sodalösung, 10%ig | 44,0 g | = | 4,4 | fache Menge v. Aluminiumsulfat |
| Hilfsverteiler 1⁴ 1%ig | 10,0 g | = | 100 | % d. Aluminiumsulfats |
| Hilfsverteiler 2⁵ 1%ig | 10,0 g | = | 100 | % d. Aluminiumsulfats |

| | | | | |
|---|---|---|---|---|
| ¹ 4-Hydroxybenzophenonmethacrylat ² Pentaerythrittetrathioglycolat ³ Azo-bis-(isobutyronitril) ⁴ C15-Paraffinsulfonat, Na-Salz, z. B. Emulgator K 30 (Bayer) ⁵ Polyethylenglycol, Molgewicht => 5000, z. B. Polywachs 5000/6000 (Hoechst) | | | | |

Die Polymerisation wird folgendermaßen geführt.

Die gesamte Wassermenge und das Aluminiumsulfat werden unter Rühren und Stickstoffüberleitung auf 80°C aufgeheizt. Bei Erreichen der vorgegebenen Temperatur wird in einem Zug Sodalösung zur Fällung des Aluminiumhydroxids zugegeben. Anschließend erfolgt die Zugabe der Hilfsverteiler als 1%-ige Lösung. Danach wird der pH-Wert der Wasserphase überprüft. Dieser beträgt 5,5. Anschließend wird die Monomerlösung auf einmal (in Batchform) zugegeben. Nach dem Temperaturmaximum wird noch 1 h bei 90°C nachgerührt. Anschließend wird auf 40°C abgekühlt und mit 20 ml 50%iger Schwefelsäure angesäuert. Der Ansatz wird weiter abgekühlt, auf eine Porzellannutsche mit Papierrundfilter (Sorte MN 616, Rückhaltebereich 4-12 µm) abgelassen und mit 5 L VE-Wasser neutral gewaschen. Das Perlpolymerisat wird für etwa 20 h bei 50°C getrocknet (Hordentrocknung).

Die Ansatzverhältnisse für die Versuche 1 bis 11 sowie die bei der Polymerisation erzielten Ergebnisse werden in den nachfolgenden Tabellen 1 und 2 aufgelistet.

**Tabelle 1**

| | MMA | n-BMA | 4-Hydroxybenzophenonmethacrylat | Pentaerythrittetrathio-glycolat | Charakterisierung | | |
|---|---|---|---|---|---|---|---|
| | | | | | Tg [°C] | KGV V50 [µm] | |
| | | | | | | mit US | ohne US |
| Exp.1 | 65 | 20 | 10 | 5 | 70 | 106 | 111 |
| Exp.2 | 55 | 20 | 20 | 5 | 73 | 110 | 116 |
| Exp.3 | 35 | 20 | 40 | 5 | 70 | 151 | 153 |
| Exp.4 | 52 | 20 | 20 | 8 | 55 | 110 | 125 |
| Exp.5 | 52 | 20 | 20 | 10 | 45 | 108 | 117 |
| Exp.6 | 58 | 20 | 20 | 2 | 84 | 82 | / |
| Exp.7* | 60 | 20 | 20 | 0 | 94 | 120 | / |
| Exp.8 | 62 | 20 | 10 | 8 | 55 | 59,6 | / |
| Exp. 9 | 60 | 20 | 10 | 10 | 44 | 75,2 | / |

| | MMA | n-BMA | 4-Hydroxybenzophenonmethacrylat | 2-Ethylhexylthioglycolat | | | |
|---|---|---|---|---|---|---|---|
| Exp. 10 | 52 | 20 | 20 | 8 | 44 | 74 | / |
| | MMA | n-BMA | DMAEMA | Pentaerythrittetrathio-glycolat | | | |
| Exp. 11 | 65 | 20 | 10 | 5 | 66 | 253 | / |

| | | | | | | | |
|---|---|---|---|---|---|---|---|
| MMA: Methylmethacrylat n-BMA: n-Butylmethacrylat DMAEMA: 2-Dimethylaminoethylmethacrylat KGV: Korngrößenverteilung *: Vergleichsbeispiel US: Ultraschall | | | | | | | |

Die KGV-Bestimmung wurde mit Hilfe eines Malvern Mastersizer 2000 durchgeführt (mit oder ohne Anwendung von Ultraschall).

Die Bestimmung der Glastemperatur erfolgte gemäß EN ISO 11357. Insbesondere erfolgte die Bestimmung der Glasübergangstemperatur Tg (im Rahmen der Erfindung synonym zu "Glastemperatur") nach dem in ISO 11357-2 festgelegten Verfahren.

Die gewichtsmittleren Molekulargewichte Mw der erfindungsgemäßen (Meth)acrylatpolymeren wurden mittels SEC (Größenauschlusschromatographie) für hydrophobe Polymere bestimmt. Hierbei wurde das nachfolgende Messsystem verwendet, welches sich folgendermaßen kennzeichnet:
Säulen: 5 SDV Säulen 8 x 300 mm bzw. 8 x 50 mm von Fa. PSS in Mainz
1 Solvent-Peak Separation Säule 8 x 100 mm von Fa. Shodex

| Nr. | Typ | | Dimension |
|---|---|---|---|
| Vorsäule | SDV 100 Å | 10µ | 8 x 50 mm |
| 1 | SDV LinL | 10µ | 8 x 300 mm |
| 2 | SDV LinL | 10µ | 8 x 300 mm |
| 3 | SDV 100 Å | 10µ | |
| 4 | Edv 100 Å | 10µ | 8 x 300 mm |
| 5 | KF-800D | | 8 x 100 mm |

Geräte:

| | | |
|---|---|---|
| Agilent 1100er Serie | Pumpe | G1310A |
| Agilent 1100er Serie | Autosampler | G1313A |
| Agilent 1100er Serie | UV-Detektor | G1314A |
| Agilent 1100er Serie | RI-Detektor | G1362A |
| Agilent 1100er Serie | Kontroll-Modul | G1323B |
| Techlab | Säulenofen | K-5 |

Säulenofen: Temperierung 35°C
Eluent: Tetrahydrofuran
wird permanent destilliert, mit Helium begast und im Kreis gepumpt
Flussrate: 1 ml/min
Injektionsvolumen: 100µl
Detektion:

| | |
|---|---|
| RI: | Temperierung 35°C |
| | Attenuation 250000 nRIU/1V |
| UV: | Wellenlänge 239 nm |
| | Attenuation 500 mAU/1V |

Versatz: 0,175 ml (Zeitversatz zwischen UV- und RI-Signal
EDV: PSS WinGPC-Software
Konzentration der Probelösung: 2 g/l (bei Mw > 10⁶: 1 g/l.... 0,25 g/l)
Standards: PMMA (z. B. von PSS (Mainz) und Fa. Polymer Laboratories)
Konzentration der Standardlösungen: 1 g/l (bei Mw > 10⁶: 0,5 g/l, MW > 2*10⁶:
(enge Verteilung) 0,25 g/l)
Interner Standard: o-Dichlorbenzol → 1 Tropfen pro 1,5 ml Autosampler-Vial
Kalibrierkurve: mit internem Standard = 49,40 ml

**Tabelle 2:**

| Charakterisierung | | | | |
|---|---|---|---|---|
| | Mn | Mw | D | PETG |
| | | | | |
| Exp. 2 | 7470 | 12100 | 1,62 | 5 |
| Exp. 4 | 4890 | 7330 | 1,5 | 8 |
| Exp. 5 | 3950 | 5670 | 1,43 | 10 |
| Exp. 6 | 18300 | 32100 | 1,75 | 2 |
| Exp. 7 * | 394000 | 2060000 | 5,22 | 0 |
| | | | | EHTG |
| Exp. 10 | 3130 | 6010 | 1,92 | 8 |

| | | | | |
|---|---|---|---|---|
| PETG = Pentaerythrittetrathioglycolat EHTG = 2-Ethylhexylthioglycolat *: Vergleichsbeispiel Polymerisationszeitmessung: | | | | |

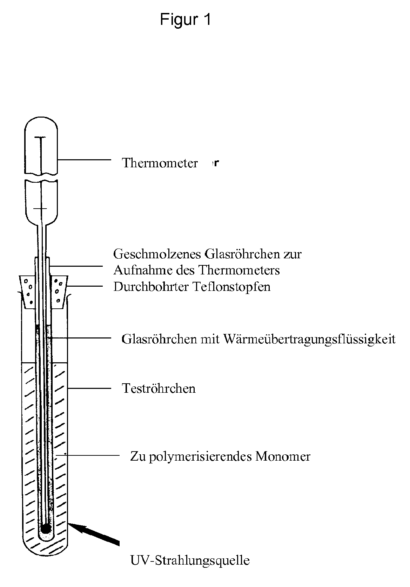

Die Polymerlösungen wurden in Reagenzgläser zu 20 g eingewogen. In der Mitte der Reagenzgläser wurde ein Röhrchen mit einem Deckel fixiert. In dieses Röhrchen wurde Diethylenglycol als Trägerflüssigkeit zu etwa. 6 cm gefüllt. Die Thermofühler wurden in das mittlere Röhrchen platziert und die Proben im Abstand von 2,5 cm von den Lampen aufgestellt. Daraus ergibt sich eine Stahlungsleistung von 1 mW/cm². Ein prinzipieller Versuchsaufbau ist in der beigefügten Figur 1 dargestellt.

Zur Durchführung der UV-Polymerisationszeitmessungen wurden alle Polymere aus der Tabelle 2, d.h. solche mit einem BPMA-Gehalt (= 4-Hydroxybenzophenonmethacrylat) von 20 % herangezogen (Exp.2, Exp. 4-7 und Exp.10).

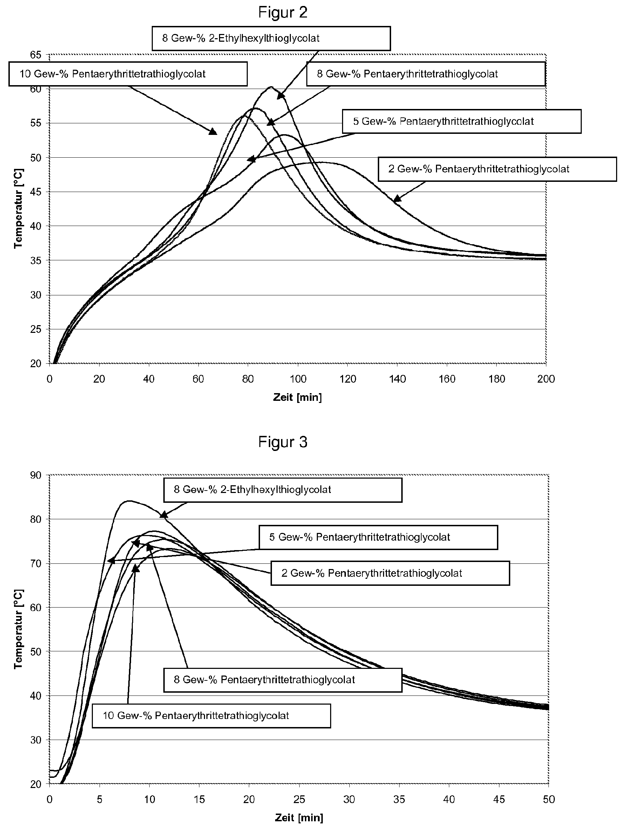

Die bei den Polymerisationszeitmessungen erhaltenen Ergebnisse sind in den beigefügten Figuren 2 und 3 dargestellt. In diesen Figuren zeigen:
Figur 2 den Temperatur-/Zeit-Verlauf für die Polymerisation von Tripropylenglycoldiacrylat unter Verwendung von 37,5 Gew.-% der in Tabelle 2 charakterisierten polymeren Photoinitiatoren;
Figur 3 den Temperatur-/Zeit-Verlauf für die Polymerisation von Tripropylenglycoldiacrylat unter Verwendung von 37,5 Gew.-% der in Tabelle 2 charakterisierten polymeren Photoinitiatoren unter Zusatz von MDEA (Verhältnis BPMA/MDEA = ½ molar) (MDEA = N-Methyl-Diethanolamin).

In einer ersten Versuchsreihe (Figur 2) wurden folgende Ergebnisse erhalten. UV-PZ steht für die maximale Temperatur, die bei den einzelnen Polymerisationen erreicht wurde.

| Reglergehalt polymerer PI | UV-PZ | |
|---|---|---|
| | T [°C] | t [min] |
| 10% Pentaerythrittetrathioglycolat | 56,03 | 78,50 |
| 8% Pentaerythrittetrathioglycolat | 57,12 | 82,67 |
| 5% Pentaerythrittetrathioglycolat | 53,25 | 94,33 |
| 2% Pentaerythrittetrathioglycolat | 49,30 | 108,83 |
| 8% Ethylhexylthioglycoat | 60,25 | 89,50 |

Aus Figur 2 in Verbindung mit den oben dargestellten Werten erkennt man, dass mit steigendem Reglergehalt, also sinkendem Molekulargewicht eine Beschleunigung der Reaktion erfolgt.

In einer zweiten Versuchsreihe (Figur 3) wurden folgende Ergebnisse erzielt:

| Reglergehalt polymerer PI | UV-PZ | |
|---|---|---|
| | T [°C] | t [min] |
| 10% Pentaerythrittetrathioglycolat | 73,22 | 12,00 |
| 8% Pentaerythrittetrathioglycolat | 75,35 | 11,50 |
| 5% Pentaerythrittetrathioglycolat | 76,25 | 9,67 |
| 2% Pentaerythrittetrathioglycolat | 77,16 | 10,33 |
| 8% Ethylhexylthioglycoat | 84,08 | 8,00 |

Man erkennt, dass bei Zusatz von MDEA die Polymerisation insgesamt in erheblichem Maß beschleunigt ist.

## Patentansprüche

1. (Meth)acrylatpolymer erhältlich durch Polymerisation einer Mischung aufweisend
a) 0,1 bis 99,9 Gew.-% wenigstens eines (Meth)acrylats der allgemeinen Formel (I) 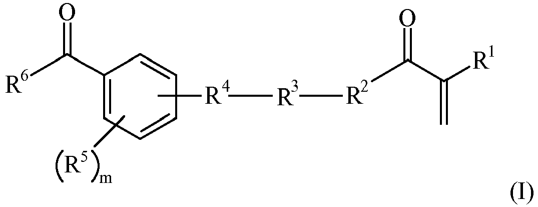
worin R¹ Wasserstoff oder Methyl bedeutet;
R² für Sauerstoff oder NH steht;
R³ für einen Rest der allgemeinen Formel II steht 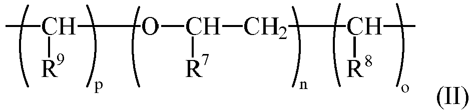
worin
R⁷, R⁸, R⁹ unabhängig voneinander Wasserstoff oder Methyl sind,
n eine ganze Zahl von Null bis zweihundert ist,
o und p unabhängig voneinander eine ganze Zahl von Null bis zwei sind, wobei für den Fall, dass die Summe von n und o und p Null ist, R³ eine Bindung ist;
R⁴ eine Bindung, Sauerstoff, NH, O-CO-O, HN-CO-O, HN-CO-NH oder Schwefel ist;
R⁵ für Wasserstoff, Halogen oder einen eins bis 20 Kohlenstoffatome aufweisenden Rest steht, der gegebenenfalls mit Sauerstoff, Stickstoff und/oder Schwefel substituiert ist, wobei m für eine ganze Zahl von eins bis fünf steht; und
R⁶ für einen Aryl- oder Heterocyclylrest steht;
und
b) 99,9 bis 0,1 Gew.-% eines oder einer Mehrzahl von a) verschiedener mit a) copolymerisierbarer ethylenisch ungesättigter Monomere, wobei die Komponenten a) und b) zusammen 100 Gew.-% der polymerisierbaren Bestandteile der Mischung ergeben, **dadurch gekennzeichnet, dass** das (Meth)acrylatpolymer ein Gewichtsmittel des Molekulargewichts MW im Bereich von größer oder gleich 1.000 g/mol bis kleiner oder gleich 50.000 g/mol aufweist, wobei MW mittels Gelpermeationschromatographie gegen Polymethylmethacrylat-Standards gemessen wird
und die Polymerisation in Anwesenheit eines Mercaptans als Kettenregler durchgeführt wird.

2. Polymer nach Anspruch 1, **dadurch gekennzeichnet, dass** R¹ Methyl ist.

3. Polymer nach Anspruch 1 oder 2, **dadurch gekennzeichnet, dass** R² Sauerstoff ist.

4. Zusammensetzung nach einem der vorhergehenden Ansprüche, **dadurch gekennzeichnet, dass** R⁴ für eine Bindung steht.

5. Zusammensetzung nach einem der vorhergehenden Ansprüche, **dadurch gekennzeichnet, dass** p = o = Null und n eine ganze Zahl zwischen 1 und 20 ist.

6. Zusammensetzung nach Anspruch 5, **dadurch gekennzeichnet, dass** R⁷ = Wasserstoff ist.

7. Zusammensetzung nach einem der Ansprüche 1 bis 4, **dadurch gekennzeichnet, dass** p= o = n = Null ist.

8. Zusammensetzung nach einem der vorhergehenden Ansprüche, **dadurch gekennzeichnet, dass** alle R⁵ Wasserstoff sind.

9. Zusammensetzung nach einem der vorhergehenden Ansprüche, **dadurch gekennzeichnet, dass** R⁶ Phenyl ist.

10. Polymer nach einem der vorhergehenden Ansprüche, **dadurch gekennzeichnet, dass** die Komponente b) ausgewählt ist aus (Meth)acrylatmonomeren.

11. Polymer nach Anspruch 10, **dadurch gekennzeichnet, dass** die Komponente b) Methylmethacrylat ist.

12. Polymer nach Anspruch 10, **dadurch gekennzeichnet, dass** b) ein Monomer ist ausgewählt aus (Meth)acrylaten mit 3 bis 5 Kohlenstoffatomen in der Estergruppe.

13. Polymer nach Anspruch 10, **dadurch gekennzeichnet, dass** b) Butylmethacrylat ist.

14. Polymer nach Anspruch 10, **dadurch gekennzeichnet, dass** b) eine Mischung von Monomeren ist aufweisend Methylmethacrylat und n-Butylmethacrylat.

15. Polymer nach einem der vorhergehenden Ansprüche, **dadurch gekennzeichnet, dass** der Kettenregler 2-Ethylhexylthioglycolat und/oder Pentaerythrittetrathioglycolat ist und in einer Menge von 0,05 bis 5 Gew.-% vorhanden ist, bezogen auf die Gesamtmasse der Komponenten a) und b).

16. Polymer nach einem der vorhergehenden Ansprüche, **gekennzeichnet durch** ein Gewichtsmittel des Molekulargewichts MW im Bereich von größer oder gleich 1.000 g/mol bis kleiner oder gleich 10.000 g/mol.

17. Polymer nach einem der vorhergehenden Ansprüche, **gekennzeichnet durch** ein Gewichtsmittel des Molekulargewichts MW von kleiner als 5.000 g/mol.

18. Polymer nach einem der vorhergehenden Ansprüche erhältlich durch Suspensions- oder Perlpolymerisation.

19. Verwendung des Polymers nach einem der Ansprüche 1 bis 18 als UV-Initiator für Polymerisationsreaktionen.

20. Verwendung des Polymers nach Anspruch 19 als Lösung in einem Reaktivverdünner.

21. Verwendung nach Anspruch 20 in einem mehrwertigen (Meth)acrylat.

22. Verwendung nach Anspruch 21 als 20 bis 50 prozentige Lösung (w/w) in Tripropylenglykoldiacrylat.

23. Verwendung des Polymers nach einem der Ansprüche 1 bis 18 als Zusatz zu UV-härtbaren Harzen.

24. Verwendung nach Anspruch 23 in Kombination mit einem Beschleuniger ausgewählt aus der Gruppe bestehend aus niedermolekularen Aminen, polymeren Aminen und polymerisierbaren Aminen.

25. Druckfarbe aufweisend ein (Meth)acrylatpolymer
gemäß den Ansprüchen 1 bis 18.

26. Druckfarbe nach Anspruch 25, umfassend
A) 10 - 40 Gew.-% Farbmittel:
B) 10 - 50 Gew.-% Bindemittel;
C1) 20 - 80 Gew.-% Löse- oder Verdünnungsmittel
C2) 0 - 10 Gew.-% übliche von C1) verschiedene Hilfsstoffe und
D) 0,5 - 25 Gew.-% als polymergebundenen UV-Initiator / - Vernetzer ein (Meth)acrylatpolymer gemäß den Ansprüchen 1 bis 18.

## Claims

1. (Meth)acrylate polymer obtainable by polymerizing a mixture comprising
a) 0.1 to 99.9% by weight of at least one (meth)acrylate of the general formula (I) 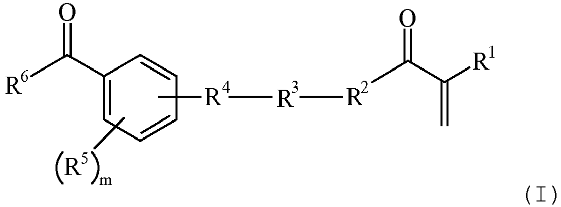
in which R¹ is hydrogen or methyl;
R² is oxygen or NH;
R³ is a radical of the general formula II 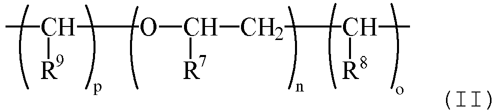
in which
R⁷, R⁸ and R⁹ independently of one another are hydrogen or methyl,
n is an integer from zero to two hundred,
o and p independently of one another are an integer from zero to two, and, if the sum of n and o and p is zero, R³ is a bond;
R⁴ is a bond, oxygen, NH, O-CO-O, HN-CO-O, HN-CO-NH or sulphur;
R⁵ is hydrogen, halogen or a radical which has one to 20 carbon atoms and is optionally substituted by oxygen, nitrogen and/or sulphur, m being an integer from one to five; and
R⁶ is an aryl or heterocyclyl radical;
and
b) 99.9% to 0.1% by weight of one or a plurality of ethylenically unsaturated monomers which are different from a) and are copolymerizable with a), the components a) and b) together making 100% by weight of the polymerizable constituents of the mixture, **characterized in that** the (meth)acrylate polymer has a weight-average molecular weight MW in the range from greater than or equal to 1000 g/mol to less than or equal to 50 000 g/mol, MW being measured by means of gel permeation chromatography against polymethyl methacrylate standards and the polymerization being carried out in the presence of a mercaptan as chain-transfer agent.

2. Polymer according to Claim 1, **characterized in that** R¹ is methyl.

3. Polymer according to Claim 1 or 2, **characterized in that** R² is oxygen.

4. Composition according to any of the preceding claims, **characterized in that** R⁴ is a bond.

5. Composition according to any of the preceding claims, **characterized in that** p = o = zero and n is an integer between 1 and 20.

6. Composition according to Claim 5, **characterized in that** R⁷ is hydrogen.

7. Composition according to any of Claims 1 to 4, **characterized in that** p = o = n = zero.

8. Composition according to any of the preceding claims, **characterized in that** all radicals R⁵ are hydrogen.

9. Composition according to any of the preceding claims, **characterized in that** R⁶ is phenyl.

10. Polymer according to any of the preceding claims, **characterized in that** component b) is selected from (meth)acrylate monomers.

11. Polymer according to Claim 10, **characterized in that** component b) is methyl methacrylate.

12. Polymer according to Claim 10, **characterized in that** b) is a monomer selected from (meth)acrylates having 3 to 5 carbon atoms in the ester group.

13. Polymer according to Claim 10, **characterized in that** b) is butyl methacrylate.

14. Polymer according to Claim 10, **characterized in that** b) is a mixture of monomers comprising methyl methacrylate and n-butyl methacrylate.

15. Polymer according to any of the preceding claims, **characterized in that** the chain-transfer agent is 2-ethylhexyl thioglycolate and/or pentaerythritol tetrathioglycolate and is present in an amount of 0.05% to 5% by weight, based on the total mass of components a) and b).

16. Polymer according to any of the preceding claims, **characterized by** a weight-average molecular weight MW in the range from greater than or equal to 1000 g/mol to less than or equal to 10 000 g/mol.

17. Polymer according to any of the preceding claims, **characterized by** a weight-average molecular weight MW of less than 5000 g/mol.

18. Polymer according to any of the preceding claims, obtainable by a suspension polymerization or bead polymerization.

19. Use of the polymer according to any of Claims 1 to 18 as a UV initiator for polymerization reactions.

20. Use of the polymer according to Claim 19 as a solution in a reactive diluent.

21. Use according to Claim 20 in a polyfunctional (meth)acrylate.

22. Use according to Claim 21 as a 20 to 50 per cent solution (w/w) in tripropylene glycol diacrylate.

23. Use of the polymer according to any of Claims 1 to 18 as an additive to UV-curable resins.

24. Use according to Claim 23 in combination with an accelerant selected from the group consisting of low molecular weight amines, polymeric amines and polymerizable amines.

25. Printing ink comprising a (meth)acrylate polymer according to Claims 1 to 18.

26. Printing ink according to Claim 25, comprising
A) 10% - 40% by weight colorant(s);
B) 10% - 50% by weight binder(s);
C1) 20% - 80% by weight solvent(s) or diluent(s);
C2) 0% - 10% by weight customary, non-C1) auxiliaries; and
D) 0.5% - 25% by weight, as polymer-bound UV initiator/crosslinker, a (meth)acrylate polymer according to Claims 1 to 18.

## Revendications

1. Polymère de (méth)acrylate pouvant être obtenu par polymérisation d'un mélange, présentant
a) 0,1 à 99, 9% en poids d'au moins un (méth)acrylate de formule générale (I) 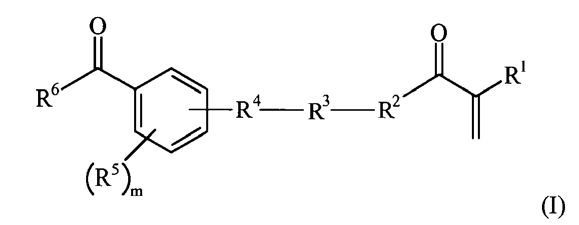 dans laquelle R¹ signifie hydrogène ou méthyle ;
R² représente oxygène ou NH ;
R³ représente un radical de formule générale II 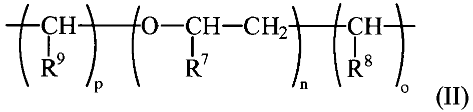 dans laquelle
R⁷, R⁸, R⁹ représentent, indépendamment les uns des autres, hydrogène ou méthyle,
n vaut un nombre entier de zéro à deux cents,
o et p valent, indépendamment l'un de l'autre, un nombre entier de zéro à deux, R³ étant une liaison lorsque la somme de n et o et p vaut zéro ;
R⁴ représente une liaison, oxygène, NH, O-CO-O, HN-CO-O, HN-CO-NH ou soufre ;
R⁵ représente hydrogène, halogène ou un radical présentant un à 20 atomes de carbone, qui est le cas échéant substitué par oxygène, azote et/ou soufre, m valant un nombre entier de un à cinq ; et
R⁶ représente un radical aryle ou hétérocyclyle ; et
b) 99,9 à 0,1% en poids d'un ou de plusieurs monomères éthyléniquement insaturés différents de a), copolymérisables avec a), les composants a) et b) représentant ensemble 100% en poids des constituants polymérisables du mélange ; **caractérisé en ce que** le polymère de (méth)acrylate présente une moyenne numérique du poids moléculaire PM située dans la plage supérieure ou égale à 1.000 g/mole à inférieure ou égale à 50.000 g/mole, PM étant mesuré par chromatographie par perméation de gel par rapport à un standard de poly(méthacrylate de méthyle)
et la polymérisation est réalisée en présence d'un mercaptan comme agent de régulation de chaîne.

2. Polymère selon la revendication 1, **caractérisé en ce que** R¹ représente méthyle.

3. Polymère selon la revendication 1 ou 2, **caractérisé en ce que** R² représente oxygène.

4. Composition selon l'une quelconque des revendications précédentes, **caractérisée en ce que** R⁴ représente une liaison.

5. Composition selon l'une quelconque des revendications précédentes, **caractérisée en ce que** p = o = zéro et n vaut un nombre entier entre 1 et 20.

6. Composition selon la revendication 5, **caractérisée en ce que** R⁷ = hydrogène.

7. Composition selon l'une quelconque des revendications 1 à 4, **caractérisée en ce que** p = o = n = zéro.

8. Composition selon l'une quelconque des revendications précédentes, **caractérisée en ce que** tous les R⁵ représentent hydrogène.

9. Composition selon l'une quelconque des revendications précédentes, **caractérisée en ce que** R⁶ représente phényle.

10. Polymère selon l'une quelconque des revendications précédentes, **caractérisé en ce que** le composant b) est choisi parmi les monomères de (méth)acrylate.

11. Polymère selon la revendication 10, **caractérisé en ce que** le composant b) est du méthacrylate de méthyle.

12. Polymère selon la revendication 10, **caractérisé en ce que** b) est un monomère choisi parmi les (méth)acrylates comprenant 3 à 5 atomes de carbone dans le groupe ester.

13. Polymère selon la revendication 10, **caractérisé en ce que** b) est du méthacrylate de butyle.

14. Polymère selon la revendication 10, **caractérisé en ce que** b) est un mélange de monomères présentant du méthacrylate de méthyle et du méthacrylate de n-butyle.

15. Polymère selon l'une quelconque des revendications précédentes, **caractérisé en ce que** l'agent de régulation de chaîne est du thioglycolate de 2-éthylhexyle et/ou du tétrathioglycolate de pentaérythritol et est présent en une quantité de 0,05 à 5% en poids, par rapport à la masse totale des composants a) et b).

16. Polymère selon l'une quelconque des revendications précédentes, **caractérisé par** une moyenne numérique du poids moléculaire PM située dans la plage supérieure ou égale à 1000 g/mole à inférieure ou égale à 10.000 g/mole.

17. Polymère selon l'une quelconque des revendications précédentes, **caractérisé par** une moyenne numérique du poids moléculaire PM inférieure à 5000 g/mole.

18. Polymère selon l'une quelconque des revendications précédentes, pouvant être obtenu par polymérisation en suspension ou en billes.

19. Utilisation du polymère selon l'une quelconque des revendications 1 à 18 comme initiateur UV pour des réactions de polymérisation.

20. Utilisation du polymère selon la revendication 19 comme solution dans un diluant réactif.

21. Utilisation selon la revendication 20 dans un (méth)acrylate polyvalent.

22. Utilisation selon la revendication 21 sous forme de solution à 20 jusqu'à 50% (P/P) dans du diacrylate de tripropylèneglycol.

23. Utilisation du polymère selon l'une quelconque des revendications 1 à 18 comme additif dans des résines durcissables par UV.

24. Utilisation selon la revendication 23 en combinaison avec un accélérateur choisi dans le groupe constitué par les amines de bas poids moléculaire, les amines polymères et les amines polymérisables.

25. Encre d'imprimerie présentant un polymère de (méth)acrylate selon les revendications 1 à 18.

26. Encre d'imprimerie selon la revendication 25, comprenant
A) 10-40% en poids de colorant ;
B) 10-50% en poids de liant ;
C1) 20-80% en poids de solvant ou de diluant
C2) 0-10 % en poids d'adjuvants usuels différents de C1) et
D) 0,5-25% en poids d'un polymère de (méth)acrylate selon les revendications 1 à 18 comme initiateur/réticulant aux UV, lié par un polymère.
